# FASCICULE DE BREVET EUROPEEN

(11) **EP 1 271 468 B1**
(45) Date de publication et mention de la délivrance du brevet: **11.01.2012**
(21) Numéro de dépôt: 02362011.5
(22) Date de dépôt: 18.06.2002
(51) Int. Cl.: G10K 11/162

(54) **Procédé de réalisation d'une couche acoustiquement résistive renforcée et panneau utilisant une telle couche**
Verfahren zur Herstellung einer verstärkten schallwiderstandsfähigen Schicht und Platte unter Verwendung einer solchen Schicht
Method of making a reinforced acoustically-resistive layer and panel using such a layer

(30) Priorité: 19.06.2001 FR 0108036
(43) Date de publication de la demande: 02.01.2003
(73) Titulaire: AIRBUS OPERATIONS (S.A.S), 31060 Toulouse (FR)
(72) Inventeur: Dublineau, Pascal, 49270 Saint Sauveur de Landermont (FR); Buge, Michel, 44230 Saint Sebastien sur Loire (FR); Porte, Alain, 31770 Colomiers (FR)
(74) Mandataire: Maupilier, Didier

(56) Documents cités:
- EP-A- 0 730 951
- EP-B- 0 352 993
- FR-A- 2 771 331
- GB-A- 2 122 540
- US-A- 4 291 079
- US-A- 5 414 232

## Description

La présente invention concerne un procédé de réalisation d'une couche résistive pour panneau acoustique notamment pour la fabrication de nacelles de réacteurs d'aéronef et plus généralement de tout conduit nécessitant des panneaux insonorisants.

L'invention concerne également la couche acoustiquement résistive ainsi obtenue et tout panneau acoustiquement absorbant mettant en oeuvre cette couche avec d'autres couches en combinaison.

On connaît des couches résistives plus ou moins perméables à l'air qui permettent des atténuations très significatives des ondes sonores. Ces couches sont combinées à des structures alvéolaires de type nid d'abeilles pour constituer des résonateurs quart-d'onde rapportés sur un réflecteur total.

Les couches résistives ont pour rôle de dissiper l'énergie acoustique en la transformant en chaleur grâce aux effets visqueux engendrés lors de la circulation des ondes. Elles comprennent généralement au moins un tissu d'amortissement acoustique et un matériau de renfort.

De telles couches ainsi que les panneaux élaborés à partir de ces couches sont décrits dans la demande de brevet français N° 2 767 411 au nom du présent titulaire. Dans cette demande, il est prévu de renforcer la résistance mécanique d'un tissu métallique ou composite d'amortissement acoustique par apport d'une couche de matériau de renfort structural, liée à cette couche résistive. Dans cette demande, les fils de renfort sont à taux de surface ouverte ajustable et solidarisés audit tissu.

Le tissu acoustique est essentiellement choisi en fonction de ses fortes capacités à rendre le traitement acoustique linéaire et à piéger les ondes acoustiques dans les cellules de Helmholtz formées par la structure alvéolaire. Ce tissu est à maille adaptée mais son épaisseur est nécessairement très faible de l'ordre de 1 à 2 dixièmes de millimètre pour fixer un ordre de grandeur.

Dans le cas du choix d'un tissu d'amortissement acoustique métallique, on a recours à un tissu en grillage inoxydable du type de ceux commercialisés sous la marque GANTOIS.

De tels tissus présentent l'avantage d'être disponibles sur le marché et même avec des épaisseurs très faibles comme indiquées, la résistance mécanique reste importante par rapport à un tissu en matériau synthétique.

En effet, dans le cas des nacelles de réacteurs d'aéronefs, la surface de la couche résistive est au contact direct de particules solides telles que des grains de sable et de petites pierres qui provoquent des phénomènes d'érosion ou encore des morceaux de glace ou des oiseaux éventuellement aspirés, qui, avec la vitesse, provoquent des dégradations mécaniques.

Le tissu métallique présente aussi l'avantage de très bien conduire la foudre balayante.

Un premier inconvénient reste son poids par rapport à des matières synthétiques, ce qui explique aussi son épaisseur très réduite afin de limiter les surpoids.

Un autre inconvénient important est la liaison entre ce tissu et le matériau de renfort, qu'il s'agisse d'une plaque perforée en métal léger tel que de l'aluminium, d'un panneau composite moulé en forme ou de fils (à savoir bandes de fils, mèches, tresses ou brins de fils, quelle qu'en soit la section).

Cette liaison est très importante car dans le cas où le tissu est disposé à l'extérieur, côté flux d'air circulant, il faut impérativement éviter tout délaminage du tissu par rapport à son support notamment dans le cas d'une amorce de rupture mécanique existante engendrée accidentellement par un corps étranger.

En effet, si le délaminage se produit, des morceaux de tissu de plus grande surface peuvent s'arracher, ce qui serait inadmissible.

De plus, un autre problème est celui de lier le tissu à son support tout en respectant les mailles car toute diminution du taux de trous ( taux de surface ouverte) contribue à diminuer les capacités d'amortissement acoustique de la couche résistive.

Dans le cas où le tissu d'amortissement acoustique est interposé entre la couche de renfort structural et la structure en nid d'abeilles comme décrit dans la demande de brevet français N° 99 16447 au nom du présent titulaire, le problème de liaison est également très important. Dans ce cas, il faut que la liaison entre la structure alvéolaire en nid d'abeilles et la couche de renfort structural s'opère de part et d'autre du tissu d'amortissement acoustique, voire en partie à travers les mailles, mais toujours sans obstruer ces mailles.

Les techniques utilisées dans l'art antérieur consistent à recourir à des matériaux composites comprenant des résines thermodurcissables, mais la maîtrise de cette famille de résines est difficile. D'ailleurs, la résine contenue dans le matériau composite ne possède pas de bonnes caractéristiques d'adhésion. Ainsi, la liaison entre le matériau composite et le tissu d'amortissement acoustique présente une résistance inférieure à la résistance intrinsèque du tissu lui-même, c'est-à-dire des fils qui le composent, si bien que la zone de collage reste le point de fragilité de la couche résistive dans son ensemble.

De plus, une fois polymérisée, ladite résine thermodurcissable est fragile, du fait de ses faibles caractéristiques mécaniques. Si les matériaux composites comprenant des résines thermodurcissables présentent des qualités indéniables, leurs faibles caractéristiques mécaniques ne sont pas suffisantes pour l'application qui en est fait dans le domaine aéronautique.

Dans la demande de brevet français FR 2 803 077 au nom du titulaire, on a tenté de résoudre les problèmes précités grâce à un procédé de fabrication d'une couche acoustiquement résistive qui comprend les étapes suivantes :
- réaliser une couche de renfort structural en utilisant des résines thermoplastiques, cette couche présentant un taux de surface ouverte donné en rapport avec les ondes acoustiques à traiter,
- rapporter un tissu acoustique métallique dont la maille est adaptée au taux de surface de la couche structurale, et
- assurer la consolidation des résines thermoplastiques sous pression et à haute température.

L'invention décrite dans ladite demande propose donc un procédé de fabrication d'une couche résistive en vue de réaliser une liaison de ses constituants, dans différentes variantes d'agencement, qui donne satisfaction en présentant des capacités de solidarisation telles que, mécaniquement par exemple, la résistance de la liaison à l'interface des composantes structurales et acoustiques est supérieure à la résistance intrinsèque du tissu d'amortissement acoustique, formant ainsi un ensemble monolithique.

Les résines thermoplastiques thermostables, telles que celle des familles des polyétherimides (PEI), des polyétheréthercétones (PEEK), des polyphénylènesulfones (PPS), des polyamides (PA) et le polyéthylènetéréphtalate (PET), sont bien connues pour leur propriétés d'adhérence. Néanmoins, les qualités et propriétés propres de chacune de ces résines ne les rendent pas toutes aussi intéressantes à utiliser. Par exemple, les résines de la famille des PEI présentent une résistance mécanique acceptable pour une très bonne qualité d'adhérence. De plus, leur mise en oeuvre est facile pour un prix modéré. A contrario, les résines de la famille des PEEK possèdent de moins bonnes qualités d'adhérence pour une résistance mécanique comparable aux résines de la famille des PEI. Malheureusement, leur prix reste dissuasif.

Dans le cas où le tissu d'amortissement est un tissu réalisé en acier inoxydable, il est très important que la couche résistive possède de très bonnes propriétés d'adhérence pour éviter les problèmes de délaminage dus aux dégradations inévitables d'un aéronef en service. En effet, il est connu de l'homme de métier que l'acier inoxydable est un matériau difficile à coller. Cet inconvénient est encore plus gênant lorsqu'il s'agit de réparer une petite partie endommagée de la nacelle, hors environnement adéquat.

Le collage sur un tissu en acier inoxydable est donc délicat et non totalement maîtrisé, que ce soit en utilisant la technologie des résines thermodurcissables ou la technologie des résines thermoplastiques.

Il ressort des techniques précédemment exposées que la couche de renfort structurale reste un point faible du panneau acoustique, même si des solutions ont été recherchées pour améliorer cet état de choses.

La présente invention a précisément pour but de remédier aux inconvénients desdites techniques.

A cet effet, l'invention a pour objet un procédé de réalisation d'une couche acoustiquement résistive renforcée, selon la revendication 1, la couche acoustiquement résistive selon la revendication 12 et le panneau d'atténuation acoustique selon la revendication 14.

Lorsque la couche de renfort structurale met en oeuvre des fibres pré-imprégnés d'une résine thermodurcissable, ledit composant apte à renforcer les propriétés mécaniques et l'adhésion est un matériau adhésif à propriétés élastiques.

Lorsque la couche de renfort structurale met en oeuvre des fibres pré-imprégnées d'une résine thermoplastique, notamment d'une résine thermoplastique thermostable choisie dans la famille des polyéthéréthercétones, ledit composant est une résine thermoplastique choisie dans la famille des polyétherimides.

Suivant un premier mode de mise en oeuvre du procédé et quel que soit le type de résine d'imprégnation des fibres de la couche de renfort structurale, lesdites fibres pré-imprégnées sont au préalable soumises à un trempage dans un bain contenant ledit composant de renforcement des propriétés mécaniques et d'adhérence pour être ensuite mise en place sur un moule par bobinage ou drapage à la manière connue.

Si ladite résine d'imprégnation est une résine thermodurcissable, il peut être avantageux dans ce cas d'effectuer avant trempage une pre-polymérisation des fibres pré-imprégnées dans des conditions appropriées de façon que le matériau composite utilisé soit plus rigide qu'à l'état brut et donc plus facile à manipuler lors de la réalisation de la couche acoustiquement résistive.

Au lieu d'un trempage, on peut mettre en contact la résine thermodurcissable ou thermoplastique, avec ledit composant de renforcement des propriétés notamment d'adhérence, au cours de la dépose sur un moule des composantes de la couche acoustiquement résistive, ledit composant de renforcement étant sous la forme d'un ou plusieurs films mis en place suivant diverses modalités qui vont être décrites plus loin.

L'invention s'applique tout particulièrement à la réalisation de couche acoustiquement résistante à deux composantes, structurale et acoustique, dont le composant acoustique est constitué d'un tissu en acier inoxydable.

Le procédé de l'invention permet en effet dans le cas de l'utilisation d'un tel tissu, à la fois de suppléer au manque de propriétés adhésives et au manque de propriétés mécaniques des résines utilisées, en assurant un collage résistant et de très bonne qualité entre la couche de renfort structurale et le tissu acoustique inoxydable et en assurant un renforcement de la tenue mécanique de la couche de renfort structurale. Dans ce cas, la résistance de la liaison à l'interface des couches structurale et acoustique est supérieure à la résistance intrinsèque du tissu d'amortissement acoustique, formant ainsi un ensemble monolithique. Ladite résistance est ainsi supérieure à la résistance du matériau composite utilisé dans les techniques antérieures aussi bien celles mettant en oeuvre des résines thermodurcissables que celles mettant en oeuvre des résines thermoplastiques, la couche ainsi obtenue peut donc résister aux chocs et effort à laquelle elle est soumise.

On va maintenant décrire plus en détail des modes de mise en oeuvre du procédé de l'invention en se référant aux dessins annexés sur lesquels :
- Figure 1 est un schéma illustrant le trempage d'un matériau composite dans un bain d'enduction, préalablement à son utilisation pour la réalisation d'une couche acoustiquement résistive selon l'invention ;
- Figure 2 illustre la réalisation d'une couche acoustiquement résistive à l'aide du matériau composite de la figure 1 ;
- Figure 3 à 5 illustrent diverses modalités de réalisation de couches acoustiquement résistives mettant en oeuvre l'association d'une résine d'imprégnation des fibres de type PEEK avec une résine de type PEI ;
- Figure 6 illustre une variante de réalisation d'une couche acoustiquement résistive selon l'invention, et
- Figure 7 est un diagramme illustrant les propriétés de résistances mécaniques de diverses couches acoustiquement résistives selon l'invention en comparaison avec des couches classiques.

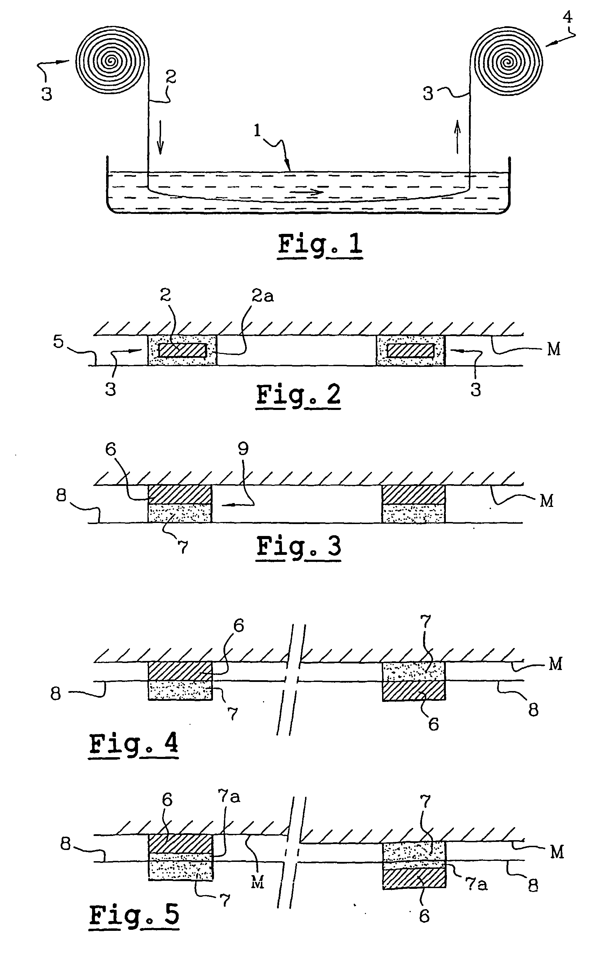

Sur la figure 1, on a représenté en 1 un bain d'enduction par trempage au défilé d'un matériau composite formé de fibres par exemple de carbone, de verre ou de KEVLAR ®, pré-imprégnées d'une résine thermodurcissable telle qu'une résine époxyde. Les fibres sont sous forme de fils, de mèches, de tresses ou de brins de fils de section variable.

Sur la figure 1, le matériau composite est formé d'un fil 2 enroulé sur une bobine 3. Le fil 2 traverse un bain 1 d'un matériau adhésif possédant des propriétés élastiques, par exemple une colle nitrile-phénolique. Après trempage, le fil 3 est rembobiné en 4.

Le fil 3 est illustré en section sur la figure 2 et comprend le fil de matériau composite 2 enrobé dans un gainage 2a de matériau adhérent provenant du bain 1.

Pour une utilisation plus facile du matériau composite 2, ce dernier sera, préalablement au trempage, soumis à une pré-polymérisation, par exemple à une température de 150 °C pendant une quinzaine de minutes, les température et durée étant fonction de la vitesse de polymérisation, elle-même fonction du procédé d'imprégnation (moyen de séchage, vitesse de défilement, etc...). Le matériau composite 2 est alors plus rigide qu'à l'état brut et donc plus facile à manipuler. De plus, la résine contenue dans le matériau composite étant déjà pré-polymérisée, elle n'est pas dissoute par les solvants que contient le bain 1.

Le matériau composite 3 ainsi gainé est ensuite utilisé pour réaliser une couche acoustiquement résistive à deux composantes, l'une structurale de renfort, l'autre acoustique constituée par un tissu métallique symbolisé en 5 sur la figure 2.

A cet effet et suivant des techniques conventionnelles de bobinage ou drapage, on met en place sur un moule symbolisé en M sur la figure 2 les fils 3 avec un écartement entre eux déterminé définissant un taux de surface ouverte de la couche de renfort structurale constituée par la dépose des fils 3, donné en rapport avec les ondes acoustiques à traiter.

Le tissu métallique 5, constitué d'acier inoxydable par exemple, est ensuite déposé sur les fils 3. Il est bien entendu possible d'inverser les déposes, le tissu 5 étant placé en premier sur le moule M.

On procède ensuite à la polymérisation de l'ensemble à la manière habituelle pour ce qui concerne les pressions et températures qui sont adaptées aux résines utilisées.

Le matériau adhérent 2a de gainage pénètre dans le matériau composite 2 par interpénétration par polymérisation et adhère au tissu métallique 5. Ce processus assure une liaison très résistante entre les fibres du matériau composite 2 et le tissu métallique acoustique 5, ainsi que des propriétés mécaniques accrues.

Il s'est révélé en effet, de manière inattendue, lorsqu'on réalise des panneaux d'atténuation acoustique du type mentionné plus haut à âme en nid d'abeilles flanqué, d'un côté, d'un réflecteur total et, de l'autre côté, d'une couche acoustiquement résistive à deux composantes selon l'invention, que la présence d'élastomère dans la composition du bain d'enduction 1 procurait un effet amortisseur élastique permettant de reprendre les efforts générés par des chocs sur les panneaux ou par l'utilisation de ces derniers (torsion, flexion, etc...), ces efforts étant repris d'une manière que ne peut réaliser la résine thermodurcissable du fait de sa fragilité. Ce sont donc autant les propriétés d'adhérence de la colle nitrile-phénolique qui sont appréciées que ses propriétés élastiques.

Le procédé de l'invention permet ainsi la réalisation d'une couche acoustiquement résistive à deux composantes constituant une pièce monolithique assurant le transfert des efforts aérodynamiques, inertiels ainsi que ceux éventuellement liés à l'application envisagée. Par exemple, dans le cas des nacelles de réacteurs, il faut aussi pouvoir recevoir et transférer les efforts liés à la maintenance vers les liaisons structurales nacelle/moteur.

Au lieu d'effectuer l'étape préalable décrite ci-dessus d'enduction du matériau composite avant réalisation d'un panneau d'atténuation acoustique, il est bien entendu possible de réaliser le panneau de manière séquentielle conformément à l'invention, c'est à dire d'associer le composant adhésif à propriétés élastiques à la résine thermodurcissable du matériau composite au cours de la fabrication du panneau.

A cet effet, on effectue les étapes suivantes :
- dépose par exemple de fils de carbone pré-imprégnés d'une résine époxyde sur un moule,
- pré-polymérisation de la résine époxyde,
- dépose d'un film par exemple de colle nitrile-phénolique,
- dépose du tissu métallique par exemple en acier inoxydable,
- polymérisation finale.

Un tel mode de réalisation ne pose pas de problème particulier, le processus de dépose des fils et du film d'adhérence, ainsi que les opérations de pré-polymérisation et polymérisation finale étant des processus conventionnels en eux-mêmes.

D'autres matériaux adhésifs que la colle nitrile-phénolique, possédant des propriétés élastiques peuvent être utilisés dans le cadre de l'invention.

Le procédé de l'invention peut également être mis en oeuvre avec des matériaux composites constitués de fibres notamment unidirectionnelles pré-imprégnées d'une résine thermoplastique thermostable par exemple de l'un des types cités dans le préambule de la présente description.

On sait que ces résines, malgré leurs indéniables qualités, possèdent quelques inconvénients.

Par exemple, la résine thermoplastique PEEK qui est utilisée dans le domaine de l'invention car ses qualités de facilité de mise en oeuvre et de résistance mécanique sont appréciées, présente néanmoins des propriétés d'adhérence qui se révèlent insuffisantes lorsqu'elle est appliquée sur un tissu métallique, en particulier un tissu en acier inoxydable.

A contrario, la résine thermoplastique PEI qui possède de très bonnes qualités d'adhérence présente des caractéristiques mécaniques moindres. De plus, ses propriétés mécaniques se dégradent lorsqu'elle est en contact avec un fluide dit « agressif ». Ces fluides sont largement utilisés dans le domaine de l'aéronautique par exemple sous forme de liquide hydraulique. En cas de fuite hydraulique, le panneau acoustique et ses composants sont alors soumis à l'écoulement du fluide agressif. Dans ces conditions, la résine PEI perd environ 50 % de ses caractéristiques.

A priori, l'utilisation de résine PEEK associée à la résine PEI ne paraît pas avantageuse face à la seule qualité d'adhérence de la résine PEI.

Or, l'association, conformément à l'invention, de la résine PEI à la résine PEEK dans le cadre de la réalisation d'une couche acoustiquement résistive à double composante structurale en matériau composite et acoustique en tissu métallique, notamment en acier inoxydable, a de manière surprenante permis d'obtenir une liaison entre le tissu métallique et le matériau composite environ huit fois plus résistante qu'une liaison réalisée avec une résine thermodurcissable et environ cinq fois plus résistante qu'une liaison réalisée avec un matériau composite thermoplastique utilisant la seule résine PEI.

Les figures 3 à 5 illustrent divers modes de mise en oeuvre du procédé de l'invention, dans le cas d'un matériau composite constitué de fils unidirectionnels, par exemple de carbone, de verre ou de KEVLAR ®, pré-imprégnées d'une résine thermoplastique thermostable, plus précisément une résine PEEK.

Auparavant, il est à noter que la technique illustrée par la figure 1 peut être utilisée, le matériau composite étant, avant sa dépose sur un moule, soumis à un trempage au défilé dans un bain contenant une solution de résine PEI dans un solvant approprié. Après évaporation du solvant, il reste en surface des fibres ou fils pré-imprégnées de résine PEEK un film de résine PEI. Le matériau composite est ensuite mis en place ainsi que le tissu métallique acoustique comme illustré par la figure 2 par exemple.

Conformément à la figure 3, on peut déposer sur un moule M par bobinage ou drapage, le matériau composite 6 constitué d'une nappe de fils pré-imprégnés de résine PEEK, puis un film de résine PEI 7, déposé en surface du matériau composite 6 par exemple par une technique de calandrage à chaud, à une température de l'ordre de 270°C par exemple, ce qui permet d'obtenir un revêtement très homogène de la résine PEEK.

Le tissu métallique acoustique 8 est ensuite déposé sur la résine PEI 7, puis l'ensemble subit une consolidation finale conventionnelle.

Lors de la fusion, il y a interpénétration macromoléculaire entre les résines PEEK (6) et PEI 7 et collage par affinité de polarité entre le tissu métallique 8 et la résine PEI à l'interface film 7/tissu métallique 8, ce qui explique les très bonnes qualités d'adhésion de l'ensemble 9.

Il est aussi possible d'intercaler le tissu métallique 8 entre la couche (6) de fils de carbone PEEK et le film 7 de résine PEI, que la couche 6 soit déposée en premier sur le moule M (partie gauche de la figure 4) ou en second (partie droite).

En variante, on peut rajouter, par exemple par enduction au pinceau, un second film 7a de résine PEI entre le tissu métallique 8 et la couche 6 de fils de carbone PEEK, que cette dernière soit déposée en premier sur le moule M (partie gauche de la figure 5) ou en dernier (partie droite).

L'ensemble formé par les éléments 6-7-8 ou 6-7-7a-8 constitue une couche résistive monolithique qui assure le transfert des efforts aérodynamiques, inertiels ainsi que ceux éventuellement liés à l'application envisagée, telle que les nacelles de réacteurs, de la même manière que dans les exemples précédents utilisant des matériaux composites thermodurcissables.

Il est à noter que l'emploi de la résine PEI est également recommandable conformément à l'invention avec une résine d'imprégnation des fibres de renfort structural de type polyphénylènesulfone.

D'une manière générale, le renforcement de la tenue structurale de la couche de renfort, conformément à l'invention, est tel que dans le cas d'une dépose filamentaire de fils, il est possible de ne renforcer qu'un fil sur deux, ce qui permet, tout en assurant la tenue structurale de la couche de renfort, d'avoir un prix de revient et un temps de fabrication similaire à ceux des fabrications de panneaux classiques.

Bien entendu, toutes les combinaisons de réalisation des panneaux sont possibles, telle que dépose filamentaire, dépose de bandes (superposées ou non) ou de panneaux, perforation de la couche de fils de carbone ou autre avant ou après dépose sur le moule, etc...

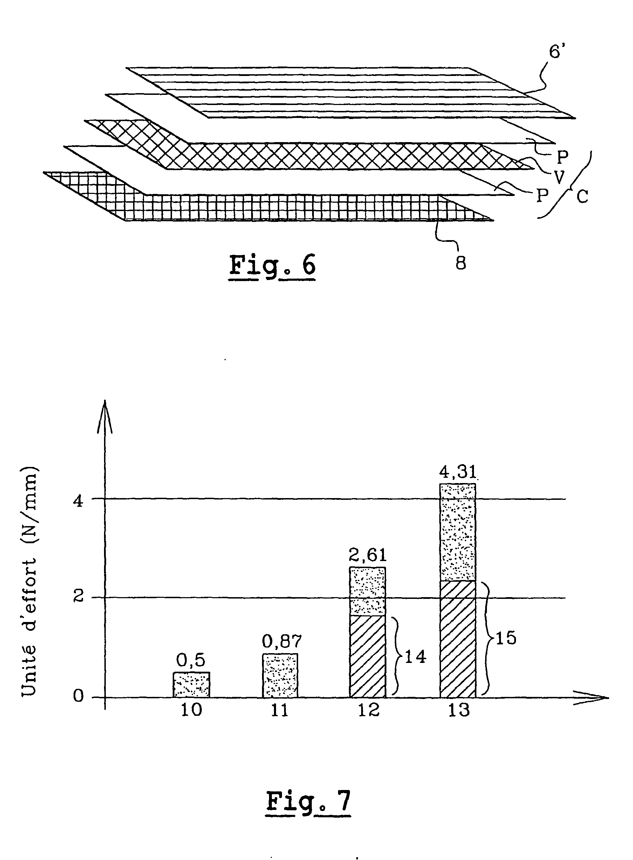

Sur la figure 6, on a illustré un mode de réalisation permettant d'améliorer les qualités d'adhérence globale entre le matériau composite, lorsqu'il s'agit de fibres de carbone imprégnées d'une résine PEEK, et le tissu métallique constitué notamment d'acier inoxydable.

D'une manière générale, on ne sait réaliser des couches de fibres de carbone imprégnées par de la résine PEEK qu'en nappe, c'est-à-dire avec des fibres orientées dans le même sens. Une bande réalisée dans ce matériau présente, alors, peu de résistance transversale. Par exemple, lorsqu'on veut perforer de trous cette bande pour obtenir le taux de surface désiré, les fibres s'écartent, ce qui rend difficile la maîtrise dudit taux.

Pour remédier à cet inconvénient, on utilise une fine couche de tissu de fibres de verre imprégnées de résine PEI, intercalée entre le matériau composite et la couche dissipatrice constituée par le tissu métallique.

La figure 6 représente en 6' une couche de renfort structural formée d'une nappe unidirectionnelle de fibres de carbone imprégnée de résine PEEK, en 8 un tissu métallique et, entre les deux éléments, un complexe C formé d'un mince tissu de fibres de verre V revêtu de part et d'autre d'un film P de résine PEI.

Le complexe C est réalisé avant la mise en place en superposition dans le moule des trois composantes 6', C, P, dans cet ordre ou dans l'ordre inverse.

On peut en variante ne revêtir d'un film P de résine PEI qu'une seule face du tissu de verre V.

Lors de la phase de polymérisation la résine PEI va migrer entre les fibres de verre et adhérer au tissu métallique 8 et à la couche 6' de fibres de carbone imprégnée de résine PEEK.

Recouvrir les deux faces du tissu V de résine PEI permet d'augmenter la quantité de résine et d'améliorer la qualité du collage entre les composantes 6' et 8, ainsi que la résistance mécanique de l'ensemble.

Ce mode de réalisation est analogue à celui de la figure 3 avec cette différence que la résine PEI 7 se trouve en plus grande quantité grâce à la présence d'un tissu de verre.

L'augmentation de la quantité de résine PEI améliore l'adhérence, cependant que la présence du tissu de verre V apporte une résistance transversale à la couche de renfort structurale 6' formée de fibres unidirectionnelles.

Enfin, sur la figure 7 sont rapportés des résultats d'essais de pelage suivant la méthode de caractérisation Bell démontrant l'efficacité de l'association résine PEEK + résine PEI.

En ordonnées du graphique est reportée l'unité d'effort en N/mm.

La figure 7 illustre en 10 la tenue d'une couche acoustiquement résistive à double composante structurale en matériau composite et acoustique en tissu métallique avec une liaison tissu/renfort structural réalisée avec la seule résine thermodurcissable du matériau composite. En 11, est illustrée la tenue d'une couche à deux composantes liées avec la seule résine thermoplastique PEEK. En 12, est illustrée la tenue d'une couche à deux composantes liées avec l'association de la résine thermoplastique PEEK du matériau composite et la résine PEI d'enrobage préalable de ce matériau composite.

En 13, est illustrée la tenue d'une couche à deux composantes liées avec l'association de la résine thermoplastique PEEK du matériau composite revêtu in situ par calandrage d'un film de résine PEI, lequel permet d'obtenir comme on peut l'observer de meilleurs résultats en adhérence.

Les références numériques 14 et 15 respectivement affectées aux exemples 12 et 13 indiquent les tenues mécaniques réduites des couches acoustiquement résistives des panneaux testés en présence d'un écoulement de fluide agressif.

En effet, en cas d'exposition du panneau acoustique à un fluide agressif, la résine PEI perd environ 50 % de ses caractéristiques d'adhérence, mais la résistance au décollement reste supérieure à celle obtenue avec les techniques précédemment employées. Ainsi, l'association PEEK + film PEI reste environ 4 fois plus résistante qu'une liaison réalisée avec une résine thermodurcissable et à peu près 2,5 fois plus résistante qu'une liaison réalisée avec un matériau composite thermoplastique utilisant la seule résine PEEK.

## Revendications

1. Procédé de réalisation d'une couche acoustiquement résistive renforcée, dans lequel :
- on réalise une couche de renfort structural (2,6) à partir de fibres pré-imprégnées d'une résine thermodurcissable ou thermoplastique, ladite couche présentant un taux de surface ouverte donné en rapport avec les ondes acoustiques à traiter,
- on associe à ladite couche de renfort (2,6) un tissu acoustique métallique (5,8) dont la maille est adaptée au taux de surface ouverte de ladite couche structurale, et
- on assure la polymérisation ou consolidation de ladite résine sous les pression et température adaptées à la résine utilisée,
**caractérisé en ce que**, lorsque la résine d'imprégnation des fibres est une résine thermodurcissable, on associe à ladite résine un composant adhésif à propriétés élastiques (2a), et que, lorsque ladite résine est une résine thermoplastique choisie dans le groupe des polyétheréthercétones et des polyphénylènesulfones, on lui associe un composant de résine thermoplastique choisie dans la famille des polyétherimides (7,7a), ledit composant étant susceptible d'interpénétration par polymérisation avec ladite résine lors de la polymérisation ou consolidation; de façon à assurer à la couche de renfort (2,6) des propriétés mécaniques et d'adhésion au tissu métallique (5,8) améliorées.

2. Procédé suivant la revendication 1, **caractérisé en ce que** ledit composant adhésif à propriété élastique (2a) est une colle nitrile-phénolique.

3. Procédé suivant l'une des revendications 1 ou 2, **caractérisé en ce que** les fibres pré-imprégnées d'une résine thermodurcissable (2) sont soumises à un trempage dans un bain (1) contenant ledit composant apte à renforcer les propriétés mécaniques et d'adhésion.

4. Procédé suivant les revendications 1 à 3, **caractérisé en ce que** préalablement au trempage, lesdites fibres pré-imprégnées d'une résine thermodurcissable (2) sont soumises à une pré-polymérisation.

5. Procédé suivant la revendication 1, **caractérisé en ce que** les fibres pré-imprégnées d'une résine thermoplastique (6) sont soumises à un trempage dans un bain contenant ledit composant apte à renforcer les propriétés mécaniques et l'adhésion.

6. Procédé suivant l'une des revendications 1 ou 5, **caractérisé en ce que** le composant apte à renforcer les propriétés mécaniques et l'adhésion est mis en place par dépose d'un film (7, 7a).

7. Procédé suivant la revendication 6, **caractérisé en ce que** le composant apte à renforcer les propriétés mécaniques d'adhésion est mis en place sous la forme d'un film (P) déposé sur l'une et/ou l'autre face d'un tissu de verre (V).

8. Procédé suivant la revendication 6, **caractérisé en ce que** les composantes de la couche acoustiquement résistive sont mises en place par bobinage ou drapage sur un moule dans l'ordre suivant ou l'ordre inverse :
- dépose du matériau composite (6),
- dépose du tissu métallique (8),
- dépose du film dudit composant (7).

9. Procédé suivant la revendication 8, **caractérisé en ce que** l'ordre de mise en place dudit tissu métallique (8) et dudit film (7) est inversé.

10. Procédé suivant la revendication 9, **caractérisé en ce que** les composantes de la couche acoustiquement résistive sont réalisées et mises en place comme suit :
- dépose d'un film (P) dudit composant (7) sur l'une et/ou l'autre face d'un tissu de verre (V), puis
- mise en place par bobinage ou drapage sur un moule dans l'ordre suivant ou l'ordre inverse :
- dépose du matériau composite (6')
- dépose dudit tissu de verre (V) revêtu du ou des films (P)
- dépose du tissu métallique (8).

11. Procédé suivant la revendication 8, **caractérisé en ce qu'**entre le tissu métallique (8) et le matériau composite (6) est déposé un second film dudit composant (7a).

12. Couche acoustiquement résistive obtenue conformément au procédé selon l'une quelconque des revendications 8 à 11.

13. Couche acoustiquement résistive selon la revendication 12, **caractérisé en ce que** le matériau composite (6') est constitué de fibres unidirectionnelles de carbone imprégnées d'une résine PEEK, le tissu de verre (V) est une fine couche de fibres de verre imprégnées d'une résine PEI et le tissu métallique (8) est en acier inoxydable.

14. Panneau d'atténuation acoustique du type comprenant une couche à structure alvéolaire flanquée, d'un côté, d'un réflecteur total et, de l'autre côté, d'une couche acoustiquement résistive à deux composantes, structurale (3, 6, 6',7, 7a,C) et acoustique (5, 8), selon la revendication 12 ou 13.

## Claims

1. A method of producing a reinforced, acoustically resistive layer, in which:
- a structural reinforcing layer (2, 6) is produced from fibers pre-impregnated with a thermosetting or thermoplastic resin, said layer having a given quantity of open surface relative to the acoustic waves to be treated,
- said reinforcing layer (2, 6) is associated with a metallic acoustic cloth (5, 8) whose mesh is suitable for the quantity of open surface of said structural layer, and
- the polymerization or consolidation of said resin is under a suitable pressure or temperature for the resin used,
**characterized in that**, when said impregnation resin is a thermosetting resin, it is combined with an adhesive component with elastic properties (2a), and when said resin is a thermoplastic resin selected from the group of polyetheretherketone and polyphenylene sulfone resins, it is combined with a thermoplastic resin component selected from the family of polyetherimides (7, 7a), said component being capable of interlocking by polymerization with said resin during the polymerization or consolidation so as to provide the reinforcing layer (2, 6) with improved mechanical properties and adhesion to the metallic cloth (5, 8).

2. A method according to claim 1, **characterized in that** said adhesive component with elastic properties (2a) is a nitrile-phenolic adhesive.

3. A method according to claim 1 or 2, **characterized in that** the fibers pre-impregnated with a thermosetting resin (2) are immersed in a bath (1) containing said component that is capable of reinforcing the mechanical and adhesive properties.

4. A method according to claims 1 to 3, **characterized in that**, prior to immersion, said fibers pre-impregnated with a thermosetting resin (2) are subjected to a pre-polymerization.

5. A method according to claim 1, **characterized in that** the fibers pre-impregnated with a thermoplastic resin (6) are immersed in a bath containing said component that is capable of reinforcing the mechanical and adhesive properties.

6. A method according to claim 1 or 5, **characterized in that** the thermoplastic resin component that is capable of reinforcing the mechanical and adhesive properties is placed by depositing a film.

7. A method according to claim 6, **characterized in that** the component that is capable of reinforcing the mechanical and adhesive properties is obtained in the form of a film (P) deposited on one and/or both surfaces of a glass cloth (V).

8. A method according to claim 6, **characterized in that** the components of the acoustically resistive layer are placed by winding or draping over a mold in the following order or in its reverse order:
- deposit of the composite material (6),
- deposit of the metallic cloth (8),
- deposit of the film of said component (7).

9. A method according to claim 8, **characterized in that** the order of placing said metallic cloth (8) and said film (7) is reversed.

10. A method according to claim 9, **characterized in that** the components of the acoustically resistive layer are produced and placed as follows:
- deposit of a film (P) of said component (7) on one and/or both surfaces of a glass cloth (V), then
- placement by winding or draping over a mold in the following order or in its reverse order:
- deposit of the composite material (6'),
- deposit of said glass cloth (V) coated with the film(s) (P),
- deposit of the metallic cloth (8).

11. A method according to claim 8, **characterized in that** between the metallic cloth (8) and the composite material (6) is placed a second film of said component (7a).

12. An acoustically resistive layer obtained by the method according to any one of claims 8 to 11.

13. An acoustically resistive layer according to claim 12, **characterized in that** the composite material (6') is comprised of unidirectional carbon fibers impregnated with a PEEK resin, the glass cloth (V) is a thin layer of glass fibers impregnated with a PEI resin, and the metallic cloth (8) is made from stainless steel.

14. An acoustic attenuation panel of the type comprising a cellular structure layer, flanked on one side by a total reflector and on the other side by an acoustically resistive layer with two components, a structural component (3, 6, 6', 7, 7a, C) and an acoustic component (5, 8), according to claim 12 or 13.

## Patentansprüche

1. Verfahren zur Herstellung einer verstärkten schalldämpfenden Schicht, bei dem man:
aus mit einem duroplastischen oder thermoplastischen Harz vorimprägnierten Fasern eine Strukturverstärkungsschicht (2, 6) herstellt, wobei die Schicht einen gegebenen Grad an offener Oberfläche in Bezug auf die zu behandelnden Schallwellen aufweist,
die Verstärkungsschicht (2, 6) mit einem akustischen Metallgewebe (5, 8), dessen Maschenweite auf den Grad der Strukturschicht an offener Oberfläche abgestimmt ist, kombiniert und
die Polymerisation oder Konsolidierung des Harzes unter einem für das verwendete Harz geeigneten Druck und einer für das verwendete Harz geeigneten Temperatur gewährleistet,
**dadurch gekennzeichnet, dass** man dann, wenn es sich bei dem Harz zum Imprägnieren der Fasern um ein duroplastisches Harz handelt, das Harz mit einer Haftkomponente mit elastischen Eigenschaften (2a) kombiniert, und dann, wenn es sich bei dem Harz um ein thermoplastische Harz aus der Gruppe der Polyetheretherketone und Polyphenylensulfone handelt, dieses mit einer Thermoplastharzkomponente aus der Familie der Polyetherimide (7, 7a) kombiniert, wobei die Komponente zur lnterpenetration durch Polymerisation mit dem Harz während der Polymerisation oder Konsolidierung in der Lage ist, so dass die Verstärkungsschicht (2, 6) verbesserte mechanische Eigenschaften und verbesserte Haftungseigenschaften gegenüber dem Metallgewebe (5, 8) erhält.

2. Verfahren nach Anspruch 1, **dadurch gekennzeichnet, dass** die Haftkomponente mit elastischen Eigenschaften (2a) einen Nitril-Phenol Kleber ist.

3. Verfahren nach Anspruch 1 oder 2, **dadurch gekennzeichnet, dass** die aus Duroplast (2) vorimprägnierte Fasern einen Tauchbad (1) unterzogen werden, das die genannte Komponente, die die mechanischen und die Haft Eigenschaften verstärken kann, beinhaltet.

4. Verfahren nach den Ansprüchen 1 bis 3, **dadurch gekennzeichnet, dass** vor dem Tauchen, die genannten aus Duroplastharz (2) vorimprägnierte Fasern einer Vorpolymerisation unterzogen werden.

5. Verfahren nach Anspruch 1, **dadurch gekennzeichnet, dass** die aus Thermoplastharz (6) vorimprägnierte Fasern in ein Tauchbad unterzogen werden, das die genannte Komponente, die die mechanischen und adhäsiven Eigenschaften verstärken kann, beinhaltet.

6. Verfahren nach Anspruch 1 oder 5, **dadurch gekennzeichnet, dass** die aus Thermoplastharz Komponente, die die mechanischen und die Haft Eigenschaften verstärken kann, durch die Anbringung einer Folie (7, 7a) eingesetzt wird.

7. Verfahren nach Anspruch 6, **dadurch gekennzeichnet, dass** die Komponente, die die mechanischen und die Haft Eigenschaften verstärken kann, in Form einer Folie (P) eingesetzt wird, die auf die eine oder andere Seite des Glasgewebe (V) angebracht ist.

8. Verfahren nach Anspruch 6, **dadurch gekennzeichnet, dass** die Komponenten der akustischen resistive Schicht durch Wicklung oder Drapieren auf eine Form in folgender oder in umgekehrter Reihenfolge eingesetzt werden:
- Anbringung des Verbundmaterials (6)
- Anbringung des Metallgewebes (8)
- Anbringung der Folie der genannten Komponente (7).

9. Verfahren nach Anspruch 8, **dadurch gekennzeichnet, dass** die Reihenfolge der Einsetzung des genannten Metallgewebes (8) und der genannten Folie (7) umgekehrt ist.

10. Verfahren nach Anspruch 9, **dadurch gekennzeichnet, dass** die Komponenten der akustischen resistive Schicht folgenderweise hergestellt und eingesetzt werden:
- Anbringung einer Folie (P) der genannten Komponente (7) auf die eine oder andere Seite des Glasgewebe (V), und
- Einsetzung durch Wicklung oder Drapieren auf eine Form in folgender oder in umgekehrter Reihenfolge:
- Anbringung des Verbundmaterials (6')
- Anbringung des genannten Glasgewebe (V) mir der Folie (P) oder Folien (P) bekleidet
- Anbringung des Metallgewebes (8).

11. Verfahren nach Anspruch 8, **dadurch gekennzeichnet, dass** zwischen dem Metallgewebe (8) und dem Verbundmaterial (6) eine zweite Folie der genannten Komponente (7a) angebracht ist.

12. Akustischen resistive Schicht gemäß dem Verfahren nach einem beliebigen der Ansprüche 8 bis 11, erhalten.

13. Akustischen resistive Schicht nach Anspruch 12, **dadurch gekennzeichnet, dass** das Verbundmaterial (6') aus Kohlenstoff unidirektional-Fasern, die von einem PEEK-Harz imprägniert sind, besteht, das Glasgewebe (V) ist eine dünne Schicht aus Glasfasern, die von eine PEI-Harz imprägniert sind und das Metallgewebe (8) ist aus einem Rostfreistahl.

14. Platte zur Schalldämpfung der Type aufweisend eine Schicht mit einer wabenartigen Struktur, die einerseits von einem Gesamtreflektor und anderseits von einer mit zwei Komponenten, strukturaler (3, 6, 6', 7, 7a, C) und akustischer (5, 8) akustischen resistive Schicht nach Anspruch 12 oder 13, flankiert ist.
